# EUROPÄISCHE PATENTSCHRIFT

(11) **EP 1 503 480 B1**
(45) Veröffentlichungstag und Bekanntmachung des Hinweises auf die Patenterteilung: **04.03.2009**
(21) Anmeldenummer: 04013065.0
(22) Anmeldetag: 03.06.2004
(51) Int. Cl.: H02K 5/24, H02K 5/22

(54) **Vorrichtung zur Aufnahme eines Elektromotors**
Device for supporting an electric motor
Dispositif pour le support d'un moteur électrique

(30) Priorität: 29.07.2003 DE 10334608
(43) Veröffentlichungstag der Anmeldung: 02.02.2005
(73) Patentinhaber: ROBERT BOSCH GMBH, 70442 Stuttgart (DE)
(72) Erfinder: Schneider, Ralf-Michael, 77836 Rheinmuenster (DE); Nolting, Peter, 77830 Buehlertal (DE)

(56) Entgegenhaltungen:
- EP-A- 0 762 612
- EP-A- 1 107 432
- US-A- 5 861 689
- US-A- 5 877 572

## Beschreibung

Die Erfindung betrifft eine Vorrichtung zur Aufnahme eines Elektromotors nach dem Oberbegriff des unabhängigen Anspruchs.

Bei einer Vielzahl von Anwendungen von Elektromotoren werden diese in ein als Motorgehäuse dienendes Aufnahmegehäuse eingebracht, welches dann zur weiteren Befestigung des Elektromotors dient. Diese Aufnahmegehäuse können zudem zur Entkopplung von Motorschwingungen benutzt werden. So sind beispielsweise Gebläsemotoren für Heiz- und Klimaanlagen, wie sie typischerweise in Kraftfahrzeugen verwendet werden, in der Regel gegenüber dem Fahrzeug schwingungstechnisch entkoppelt. Eine Übertragung des Körperschalls des Elektromotors bzw. der Gebläseeinheit auf die Karosserie des Fahrzeuges und damit in den Fahrgastraum hinein, gilt es zu reduzieren.

Hauptquelle dieser unerwünschten Schwingungen sind Unwuchten des elektrischen Antriebsmotors, sowie die Kommutierung innerhalb des Motors.

Gängige Halterungsmethoden für derartige Motoren sehen beispielsweise vor, den Elektromotor in ein als Motorgehäuse dienendes Aufnahmegehäuse einzubringen, wobei zwischen dem Elektromotor und dem Aufnahmegehäuse elastische Verbindungsmittel eingebracht werden, die eine Entkopplung der Motorschwingungen gegenüber dem Motorgehäuse und somit beispielsweise gegenüber einer Fahrzeugkarosserie ermöglichen. An der Motorhalterung selbst befindet sich typischerweise ein Flansch zur sicheren Verbindung des Motors mit der Klimaanlage, beispielsweise über ein an der Karosserie ausgebildetes Trägerteil.

So offenbart beispielsweise die DE 43 34 124 A1 eine Vorrichtung zur Aufnahme eines Elektromotors, die eine besonders schwingungsarme und damit geräuschdämpfende Wirkung dadurch erzielt, dass zwischen den Innenwänden dieser Aufnahmevorrichtung und den diesen zugewandten Außenwänden des Motorgehäuses wenigstens ein elastisches Dämpfelement angeordnet ist, das sich an den einander zugewandten Wänden der Aufnahmevorrichtung und des Motorgehäuses abstützt.

Kritischer Punkt bei der Übertragung des durch den Elektromotor erzeugten Körperschalls auf das Motorgehäuse und somit auf die Fahrzeugkarosserie ist dabei der typischerweise verwendete Steckanschluss zur Energieversorgung des Elektromotors.

Bekannt sind Gebläsemotoren, eingebaut in flanschartige Gehäuse, welche mit Entkopplungselementen zur Geräusch- und Schwingungsdämpfung versehen sind. Der Motor ist dabei mit einem integrierten Steckanschluss versehen. Das Motorgehäuse ist an der Stelle des Steckanschlusses zur Durchführung und Aufnahme eines Gegensteckers ausgespart und weist somit eine entsprechende Öffnung auf.

Ebenfalls bekannt sind Gegenstecker, die radial an den Steckanschluss kontaktiert werden. Diese Gegenstecker können dabei durch eine spezielle Führung und die Aufnahmeöffnung am Steckanschluss in Position gehalten werden. Durch eine Verrastung am Gehäuse kann der Gegenstecker vor unbeabsichtigem Entfernen gesichert werden. Eine entsprechende Vorrichtung zeigt beispielsweise die EP 1 107 432 A1.

Aus der DE 42 155 04 A1 ist ein Elektromotor für einen Lüfter bekannt, bei dem die Steckverbindung für eine elektrische Zuleitung zum Antriebsmotor am Motorgehäuse ausgebildet ist. Die Stromzuführung zu der Kohlebürste des Motors der DE 42 155 04 A1 erfolgt durch eine Bürstenlitze, die durch einen Radialschlitz der Bürstenführung hindurch ragt und aus dem Motorgehäuse zu einem Anschluss-Stecker geführt ist. Auf den Anschluss-Stecker wird in bekannter Weise ein mit einer Energieversorgung verbundener Gegenstecker aufgesteckt.

Die US 5 877 672 offenbart verschiedene Maßnahmen zur Kapselung einer Reluktanzmaschine. Dazu gehören speziell ausgestaltete Lagerschilde sowie eine speziell ausgestaltete, abgedichtete Durchführung eines Steckkontaktes durch ein solches Lagerschild, wobei Dichtlippen zur Anlage an den durchgeführten Steckkontakt kommen, so dass diese die Durchtrittsöffnung abdichten.

Die der vorliegenden Erfindung zu Grunde liegende Aufgabe besteht darin, vom Elektromotor erzeugte Geräusche und Schwingungen vor einer Einkopplung in das Motorgehäuse fernzuhalten, bzw. in ihrem Durchgriff deutlich zu bedämpfen. Darüber hinaus ist die Abdichtung des Steckerelementes im Gehäuse zu verbessern.

### Vorteile der Erfindung

Die erfindungsgemäße Vorrichtung zur Halterung eines Elektromotors mit den Merkmalen des unabhängigen Anspruchs hat gegenüber den entsprechenden Vorrichtungen des Standes der Technik den Vorteil, dass die elektrischen Anschluss-Elemente (Stecker) über elastische Mittel an das Motorgehäuse angebunden sind.

Erfindungsgemäß ist vorgesehen, dass die Mittel zur Aufnahme und/oder Durchführung eines elektrischen Steckerelementes zur Energieversorgung des Elektromotors zumindest eine federelastische Lamelle umfassen, die mit dem Motorgehäuse verbunden ist. Auf diese Art ist es möglich, die vom Elektromotor erzeugten Schwingungen, die über das Steckerelement weitergeleitet werden, weitgehend vom Motorgehäuse zu entkoppeln. Dadurch, dass die Mittel zur Aufnahme und/oder Durchführung des elektrischen Steckerelementes eine federelastische Lamelle umfassen, die mit dem Motorgehäuse verbunden ist, werden die über das elektrische Steckerelement weitergeleiteten Schwingungen durch die federelastische Lamelle gedämpft und wenn überhaupt, nur sehr schwach an das Motorgehäuse weitergegeben. In vorteilhafter Weise weist die federelastische Lamelle zumindest eine Öffnung zur Aufnahme und/oder Durchführung des elektrischen Anschlusselementes auf. Auf diese Weise ist es möglich, das elektrische Anschlusselement durch die Öffnung der Lamelle hindurchzuführen und beispielsweise an dieser zu verrasten. Dabei können in vorteilhafter Weise die Verrastungsmittel an der federelastischen Lamelle selbst ausgebildet sein. Diese Ausführungsform führt zu einer vereinfachten Ausbildung des Steckerelementes bei gleichzeitiger Möglichkeit einer sicheren Verrastung. In anderen Ausführungsbeispielen können die beweglichen Teile der Verrastung wie bisher am elektrischen Steckerelement selbst angebracht sein.

Vorteilhafte Weiterbildungen und Ausführungsformen der erfindungsgemäßen Vorrichtung werden durch die in den Unteransprüchen enthaltenen Merkmale ermöglicht.

In vorteilhafter Weise kann die federelastische Lamelle zur Aufnahme und/oder Durchführung des elektrischen Anschlusselementes einstückig mit dem Motorgehäuse ausgebildet sein. In anderen Ausführungsbeispielen können zwischen der federelastischen Lamelle und dem Motorgehäuse zusätzliche schwingungsdämpfende, beispielsweise elastische Mittel vorgesehen sein, die eine weitere Reduzierung des Schwingungseintrages in das Motorgehäuse bewirken.

Um eine Einkopplung in das Motorgehäuse, der auf das Steckerelement übertragenen Schwingungen zu reduzieren, ist die federelastische Lamelle, die zur Aufnahme des Steckerelementes dient, lediglich einseitig mit dem Motorgehäuse verbunden. Auf diese Weise ist es möglich, dass das elektrische Anschlusselement an der federelastischen Lamelle befestigt ist, wobei diese wiederum mit dem Motorgehäuse verbunden ist, ohne dass eine starke Einkopplung der über das Steckerelement übertragenen Schwingungen auf das Motorgehäuse erfolgt.

Das Motorgehäuse weist eine weitere Öffnung zur Aufnahme und/oder Durchführung des elektrischen Anschlusselementes auf, durch die das Steckerelement hindurchgeschoben und mit entsprechenden Anschlusskontakten am Elektromotor verbunden wird.

In vorteilhafter Weise besitzt diese weitere Öffnung am Motorgehäuse Dichtmittel, insbesondere elastische Dichtmittel, die bei eingesetztem Steckerelement zwischen dem Steckerelement und zumindest einer Gehäusewand des Motorgehäuses zu liegen kommen. Diese Dichtmittel erfüllen zum einen die Funktion, die Öffnung am Motorgehäuse vor dem Eindringen von Schmutz und Feuchtigkeit zu sichern, zum anderen ist es auf Grund der elastischen Ausbildung dieser Dichtelemente möglich, die vom Elektromotor erzeugten und über das Steckerelement weitergeleiteten Schwingungen gegenüber dem Motorgehäuse weiter zu dämpfen.

In einer alternativen Ausführungsform der erfindungsgemäßen Vorrichtung können diese Dichtmittel, die jedoch auch als Dämpfelemente dienen, auch am elektrischen Anschlusselement (Stecker) angebracht sein. Durch die vorgeschlagene Anbringung einer den Stecker umfassenden elastischen Dichtung, die beispielsweise aus Gummi bestehen kann, und am Gehäuse oder aber am Stecker angebracht ist, ist eine Abdichtung zwischen dem Inneren des Motorgehäuses und der Umgebung des Gehäuses sichergestellt. Die elastische Dichtung kann beispielsweise aus einem gummiartigen Werkstoff, vorteilhafter Weise im 2-Komponenten-Spritzverfahren hergestellt werden.

Durch die räumliche Trennung des Verrastungsbereichs des Steckerelementes in der Lamelle gegenüber dem Dichtungsbereich für das Steckerelement lässt sich eine einfache und glatte und somit wirkungsvolle Dichtfläche zwischen dem elektrischen Steckerelement und dem Dichtelement realisieren. Gleichzeitig ist es möglich, auf Grund der Funktionsteilung zwischen Verrastung und Dichtung für eine einfache aber sichere Verrastung des Anschlusselementes zu sorgen.

In vorteilhafter Weise dient die räumliche Trennung des Verrastungsbereichs und des Dichtungsbereiches als Führung für den Stecker und somit als Einführhilfe zur Kontaktierung des Steckanschlusses.

Durch die Vergrößerung des Abstandes zwischen der Lamelle und der abgedichteten Öffnung am Motorgehäuse wird die Festigkeit des Steckers gegenüber Querkräften erhöht. Die Geräusch- und Schwingungseinleitung durch diese Verlängerung der Einleitungswege wird darüber hinaus verringert.

Mit der erfindungsgemäßen Vorrichtung zur Halterung eines Elektromotors ist es in vorteilhafter Weise möglich, vom Motor erzeugte Geräusche und Schwingungen von einer Einkopplung in das Gehäuse weitgehend fernzuhalten. Insbesondere ist es möglich, Schwingungen, die über das elektrische Steckerelement vom Elektromotor auf das Motorgehäuse übertragen werden, weitgehend zu bedämpfen.

Weitere Vorteile der erfindungsgemäßen Vorrichtung zur Aufnahme und Halterung eines Elektromotors sind der nachfolgenden Zeichnung sowie der zugehörigen Beschreibung der Ausführungsbeispiele zu entnehmen.

### Zeichnung

In der Zeichnung sind zwei Ausführungsbeispiele der erfindungsgemäßen Vorrichtung zur Halterung eines Elektromotors dargestellt, die in der nachfolgenden Beschreibung zusammen mit dem Stand der Technik näher erläutert werden. Die Figuren der Zeichnung, deren Beschreibung sowie die Ansprüche enthalten zahlreiche Merkmale in Kombination. Ein Fachmann wird diese Merkmale auch einzeln betrachten und zu sinnvollen, weiteren Kombinationen zusammenfassen, die somit ebenfalls als in der Beschreibung offenbart gelten.

Es zeigen
- Figur 1: einen Längsschnitt durch eine Vorrichtung zur Aufnhme eines Elektromotors nach dem Stand der Technik in einer vereinfachten, schematischen Darstellung,
- Figur 2: ein erstes Ausführungsbeispiel der erfindungsgemäßen Vorrichtung zur Aufnahme eines Elektromotors im Längsschnitt einer vereinfachten schematischen Darstellung,
- Figur 3: ein zweites Ausführungsbeispiel der erfindungsgemäßen Vorrichtung in einer vereinfachten schematischen Darstellung im Längsschnitt.

### Beschreibung der Ausführungsbeispiele

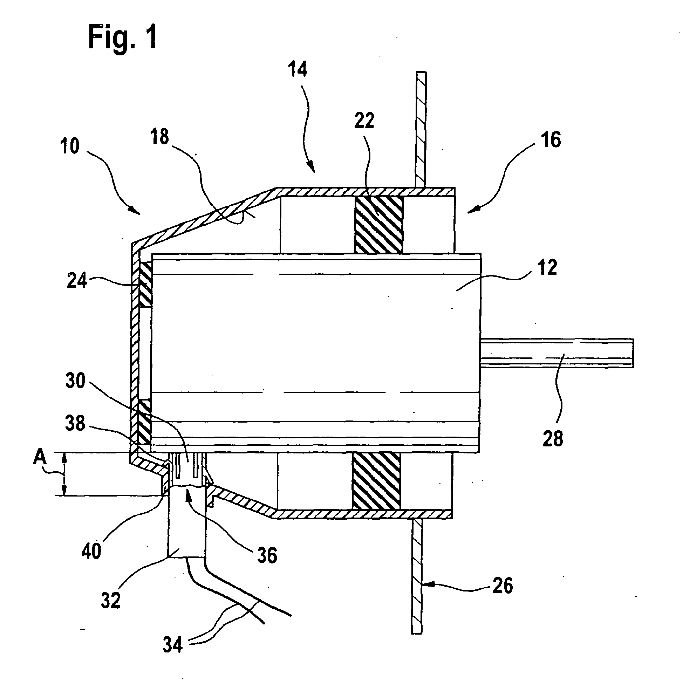

Figur 1 beschreibt eine Vorrichtung 10 zur Halterung eines Elektromotors 12 nach dem Stand der Technik.

Bei der Vorrichtung gemäß Figur 1 ist der Elektromotor 12 in einem Motorgehäuse 14 eingebaut. Das Motorgehäuse 14 ist im Wesentlichen topfförmig ausgeformt und weist eine Aufnahmeöffnung 16 auf, durch die der Elektromotor 12 in das Motorgehäuse 14 eingeführt werden kann.

Zwischen der Innenwand 18 des Motorgehäuses 14 und der Außenwand 20 des Elektromotors, die beispielsweise durch das Polgehäuse gebildet sein kann, sind elastische Dämpfelemente 22 bzw. 24 angeordnet. Diese Dämpfelemente 22 bzw. 24 dienen dazu, Schwingungen des Elektromotors gegenüber dem Motorgehäuse 14 zu dämpfen. In typischer Weise sind die Dämpfelemente aus einem elastischen Material, wie beispielsweise Gummi, ausgeformt. Durch eine flanschartige Anordnung 26 kann das Motorgehäuse und damit der Elektromotor an einem Anbauteil befestigt werden. So ist es beispielsweise möglich, den Elektromotor zum Antrieb eines Gebläserades einer Heizund/oder Klimaanlage eines Kraftfahrzeuges zu verwenden. In diesem Fall wird ein entsprechendes Gebläserad auf die Welle 28 des Elektromotors 12 aufgesetzt und das Motorgehäuse 14 über den Flanschbereich 26 im Klimakasten des Kraftfahrzeuges befestigt.

Zur Energieversorgung weist der Elektromotor 12 Steckkontakte 30 auf, auf die ein entsprechendes elektrisches Anschlusselement, wie beispielsweise ein Stecker 32, aufgesetzt werden kann. Der Stecker 32 ist über Verbindungsmittel 34 dann beispielsweise mit dem Bordnetz eines Kraftfahrzeuges verbunden. Ein solcher elektrischer Anschluss-Stecker wird typischerweise durch eine Öffnung 36 im Motorgehäuse 14 hindurchgeführt und mit Rastelementen 38 vor dem versehentlichen Abzug gesichert. Zusätzlich kann eine Führung 40 im Motorgehäuse 14 vorgesehen sein, um den Steckanschluss in Position zu halten. Die Parallelführung 40 übernimmt dabei auch die Funktion der Abdichtung zwischen dem Inneren des Motorgehäuses 14 und der äußeren Umgebung des Gehäuses. Der Abstand A zwischen dem Motor 12 und der Parallelführung 40 im Motorgehäuse 14 bestimmt dabei im Wesentlichen die mechanische Stabilität des Steckers 32 gegenüber Kräften, die eine nicht radiale Komponente aufweisen.

Da der Stecker 32 sowohl mit dem Elektromotor 12, als auch mit dem Motorgehäuse 14 bzw. der Führung 40 im Motorgehäuse verbunden ist, werden Schwingungen des Elektromotors über das Steckerelement 32 auf das Motorgehäus 14 übertragen, so dass die Schwingungsdämpfung, die durch die Dämpfelemente 22 bzw. 24 beabsichtigt ist, teilweise wieder aufgehoben wird.

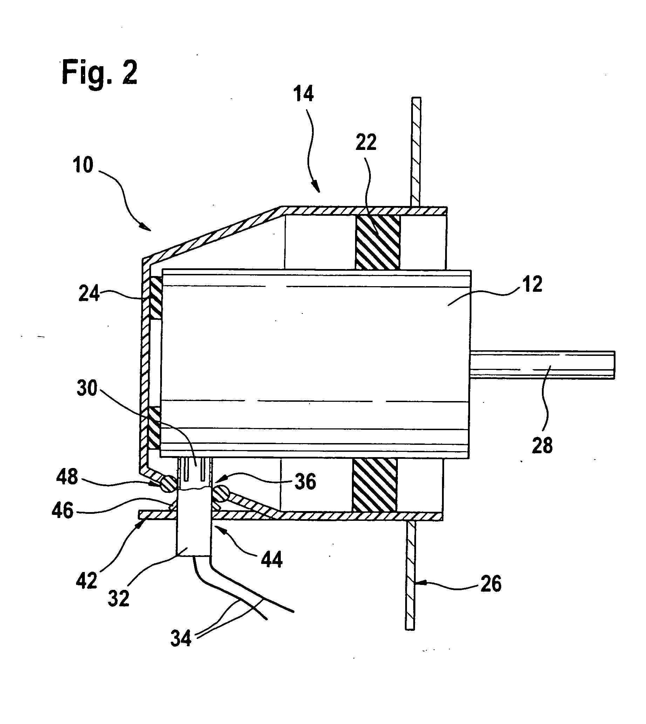

Figur 2 zeigt ein erstes Ausführungsbeispiel einer erfindungsgemäßen Vorrichtung zur Halterung eines Elektromotors. Dabei sind gleichartige Bauteile mit gleichen Bezugszeichen wie in der Figur 1 versehen. Das Motorgehäuse 14 der erfindungsgemäßen Vorrichtung weist zumindest eine Lamelle 42 auf, die im Ausführungsbeispiel der Figur 2 in axialer Richtung der Motorwelle 28 vom Motorgehäuse 14 absteht. Die Lamelle 42 ist in Form eines Auslegers als schmaler Steg am Motorgehäuse ausgebildet, so dass diese auf Grund ihrer Elastizität und der einseitigen Anbindung an das Motorgehäuse Motorschwingungen, die über den Stecker 32 ausgehend vom Elektromotor 12 übertragen werden, vom Motorgehäuse 14 weitgehend fernhält.

Die Lamelle 42 ist typischerweise ebenso wie das Motorgehäuse 14 aus einem Kunststoff gefertigt, so dass die Lamelle 42 federelastisch zum Motorgehäuse 14 ist. Durch eine Öffnung 44 in der Lamelle 42 wird das Steckerelement 32 hindurchgeführt und über eine weitere Öffnung 36 in das Motorgehäuse 14 eingeführt. Der Stecker 32 ist in bekannter Weise mit Steckkontakten 30 des Elektromotors verbunden.

Die Gehäuselamelle 42 der erfindungsgemäßen Vorrichtung gemäß Figur 2 weist zudem Verrastungselemente 46 auf, die am Stecker 32 angreifen und diesen gegen ein unbeabsichtigtes Entfernen sichern.

In vorteilhafter Weise weist die Öffnung 36 des Motorgehäuses 14 elastische Dichtmittel auf, die die Öffnung im Motorgehäuse bei eingesetzten'm Anschlusselement gegen das Eindringen von Schmutz oder Feuchtigkeit abdichtet. Darüber hinaus sorgt die elastische Ausbildung der Dichtelemente 48 dafür, dass Schwingungen, die vom Elektromotor 12 erzeugt werden und über den Stecker 32 abgeleitet werden, nicht oder nur stark gedämpft auf das Motorgehäuse 14 übertragen werden. Die elastische Dichtung kann dabei aus gummiartigem Werkstoff, vorteilhafter Weise im 2-Komponenten-Spritzverfahren hergestellt werden. Dabei kann vorgesehen sein, das Dichtelement 48 entweder direkt am Motorgehäuse 14 auszubilden, um einen möglichst einfachen Aufbau des Steckers zu ermöglichen. Andererseits ist es aber auch möglich, ein oder mehrere entsprechende Dichtelemente 48 steckerseitig vorzusehen.

Durch die räumliche Trennung des Verrastungsbereichs (46) in der Lamelle 42 gegenüber dem Dichtungsbereich der Dichtelemente 48 im Motorgehäuse lässt sich eine einfache, da glatte, aber wirkungsvolle Dichtfläche zwischen dem Stecker 32 und dem Dichtelement 48 realisieren. Darüber hinaus ist es auf diese Art möglich, eine einfache und sichere Verrastung des Steckers 32 am Motorgehäuse 14 zu erzeugen. Die beweglichen Teile der Verrastung 46 können zur Vereinfachung des Steckers 32 in die Lamelle 42 integriert werden. Andererseits ist es aber ebenso möglich, entsprechende Rastelemente 46 in bekannter Weise am Stecker 32 auszubilden.

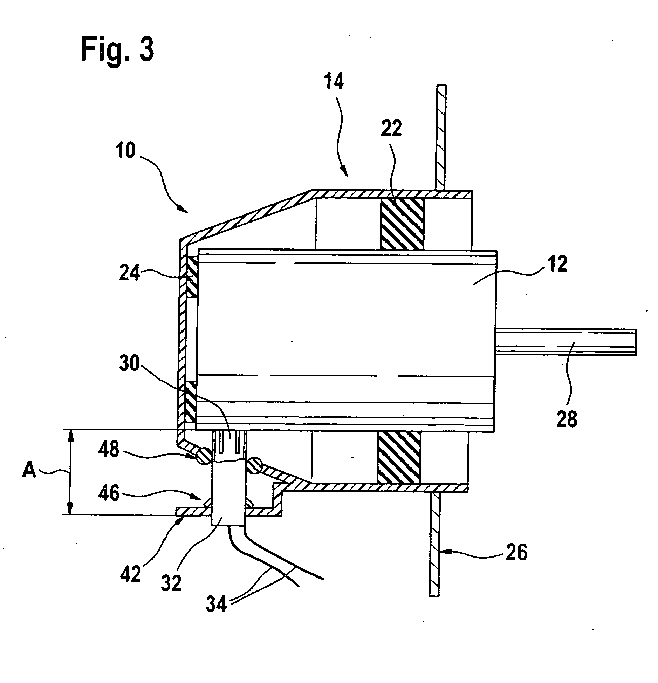

Figur 3 zeigt ein zweites Ausführungsbeispiel der erfindungsgemäßen Vorrichtung zur Halterung eines Elektromotors, ebenfalls in einer vereinfachten schematischen Darstellung.

Um den Abstand A zwischen Elektromotor 12 und der Parallelführung im Motorgehäuse 14 zu vergrößern, ist im Ausführungsbeispiel gemäß Figur 3 vorgesehenen, die Befestigungslamelle 42 gegenüber dem Motorgehäuse abzuwinkeln. Der Abstand A zwischen Motor und Parallelführung im Gehäuse bestimmt im Wesentlichen die mechanische Stabilität des Steckers 32 gegenüber Kräften, die nicht ausschließlich radial angreifen. Durch die Ausgestaltung gemäß Figur 3 wird die Festigkeit des Steckers 32 daher gegenüber Querkräften erhöht. Darüber hinaus wird die Geräusch- und Schwingungseinleitung über den Stecker 32 in das Motorgehäuse 14 durch die Verlängerung der Einleitungswege zusätzlich verringert. Auf diese Weise ist es ebenso möglich, die Geräusch- und Schwingungseinleitung in den Stecker 32 durch eine Verlängerung der Einleitungswege zusätzlich zu verringern. Weiterhin dient die Führung des Steckers 32 durch die beabstandeten Ebenen der Lamelle 42 und der Dichtelemente 48 als Einführhilfe in den Steckanschluss des Elektromotors, der im vorliegenden Ausführungsbeispiel durch die Steckkontakte 30 gebildet wird.

Durch die erfindungsgemäße Vorrichtung lässt sich in vorteilhafter Weise ein Gebläse ausbilden, welches eine erhöhte Schwingungsdämpfung, eine verbesserte Abdichtung des Steckers im Motorgehäuse sowie eine einfache Kontaktierung des Elektromotors gewährleistet.

Die erfindungsgemäße Vorrichtung ist nicht auf die.in der Zeichnung dargestellten Ausführungsbeispiele beschränkt. Die Ausführungsbeispiele dienen lediglich der beispielhaften Illustration der zu Grunde liegenden Erfindungsidee und begründen keinerlei Beschränkung des beanspruchten Gegenstandes.

Insbesondere ist die erfindungsgemäße Vorrichtung nicht beschränkt auf die Verwendung bei einem Gebläsemotor. Mit der beanspruchten Vorrichtung lassen sich in vorteilhafter Weise Motorschwingungen und Geräusche gegenüber einem Motoraufnahmegehäuse unterdrücken, unabhängig von der Verwendung des Motors.

## Patentansprüche

1. Vorrichtung (10) zur Aufnahme eines Elektromotors (12), insbesondere eines Gebläsemotors, mit einem als Motorgehäuse dienenden Aufnahmegehäuse (14) mit einer Aufnahmeöffnung (16), in das der Elektromotor (12) zumindest teilweise hineinragt, sowie mit Mitteln (36, 42, 44, 46, 48) zur Aufnahme und/oder Durchführung eines elektrischen Anschlusselementes (32) zur Energieversorgung des Motors (12), **dadurch gekennzeichnet, dass**
- die Mittel (36, 42, 44, 46, 48) zur Aufnahme und/oder Durchführung des elektrischen Anschlusselementes (32) zumindest eine federelastische Lamelle (42) umfassen, die mit dem Aufnahmegehäuse (14) verbunden ist,
- die federelastische Lamelle (42) zumindest eine Öffnung (44) zur Aufnahme und/oder Durchführung des elektrischen Anschlusselementes (32) aufweist und
- das elektrische Anschlusselemente (32) zumindest an der federelastischen Lamelle (42) befestigt ist.

2. Vorrichtung nach Anspruch 1, **dadurch gekennzeichnet, dass** die federelastische Lamelle (42) einseitig mit dem Aufnahmegehäuse (14) verbunden ist.

3. Vorrichtung nach Anspruch 1, **dadurch gekennzeichnet, dass** die federelastische Lamelle (42) einstückig mit dem Aufnahmegehäuse (14) ausgebildet ist.

4. Vorrichtung nach Anspruch 1, **dadurch gekennzeichnet, dass** das elektrische Anschlusselement (32) zumindest mit der federelastischen Lamelle (42) verrastet ist.

5. Vorrichtung nach Anspruch 4, **dadurch gekennzeichnet, dass** Verrastungsmittel (46) an der federelastischen Lamelle (42) vorgesehen sind.

6. Vorrichtung nach einem der vorhergehenden Ansprüche, **dadurch gekennzeichnet, dass** das elektrische Anschlusselement (32) einen Stecker aufweist.

7. Vorrichtung nach einem der vorhergehenden Ansprüche, **dadurch gekennzeichnet, dass** das Aufnahmegehäuse (14) eine weitere Öffnung (36) zur Aufnahme und / oder Durchführung des elektrischen Anschlusselementes (32) aufweist.

8. Vorrichtung nach Anspruch 7, **dadurch gekennzeichnet, dass** die weitere Öffnung (36) des Aufnahmegehäuses Dichtmittel (48), insbesondere elastische Dichtmittel, aufweist, die zwischen dem elektrischen Anschlusselement (32) und zumindest einer Gehäusewand des Aufnahmegehäuses (14) zu liegen kommen.

9. Vorrichtung nach Anspruch 8, **dadurch gekennzeichnet, dass** das elektrische Anschlusselement (32) Dichtmittel, insbesondere elastische Dichtmittel, aufweist, die zwischen dem elektrischen Anschlusselement (32) und zumindest einer Gehäusewand des Aufnahmegehäuses (14) zu liegen kommen.

10. Gebläse, zumindest aufweisend ein Gebläserad, einen das Gebläserad antreibenden Motor (12) sowie eine Vorrichtung nach einem der Ansprüche 1 bis 11.

## Claims

1. Apparatus (10) for accommodating an electric motor (12), in particular a blower motor, having an accommodation housing (14) which serves as a motor housing and has an accommodation opening (16) into which the electric motor (12) at least partially projects, and having means (36, 42, 44, 46, 48) for accommodating and/or conducting an electrical connection element (32) to the power supply of the motor (12), **characterized in that**
- the means (36, 42, 44, 46, 48) for accommodating and/or conducting the electrical connection element (32) comprise at least one spring-elastic lamella (42) which is connected to the accommodation housing (14),
- the spring-elastic lamella (42) has at least one opening (44) for accommodating and/or conducting the electrical connection element (32), and
- the electrical connection element (32) is attached at least to the spring-elastic lamella (42).

2. Apparatus according to Claim 1, **characterized in that** one end of the spring-elastic lamella (42) is connected to the accommodation housing (14).

3. Apparatus according to Claim 1, **characterized in that** the spring-elastic lamella (42) is integrally formed with the accommodation housing (14).

4. Apparatus according to Claim 1, **characterized in that** the electrical connection element (32) is locked at least to the spring-elastic lamella (42).

5. Apparatus according to Claim 4, **characterized in that** locking means (46) are provided on the spring-elastic lamella (42).

6. Apparatus according to one of the preceding claims, **characterized in that** the electrical connection element (32) has a plug.

7. Apparatus according to one of the preceding claims, **characterized in that** the accommodation housing (14) has a further opening (36) for accommodating and/or conducting the electrical connection element (32).

8. Apparatus according to Claim 7, **characterized in that** the further opening (36) of the accommodation housing has sealing means (48), in particular elastic sealing means, which come to rest between the electrical connection element (32) and at least one housing wall of the accommodation housing (14).

9. Apparatus according to Claim 8, **characterized in that** the electrical connection element (32) has sealing means, in particular elastic sealing means, which come to rest between the electrical connection element (32) and at least one housing wall of the accommodation housing (14).

10. Blower, at least having a blower impeller, a motor (12) which drives the blower impeller, and an apparatus according to one of Claims 1 to 9.

## Revendications

1. Dispositif (10) pour recevoir un moteur électrique (12), en particulier un moteur à surcompresseur, comprenant un carter de réception (14) servant de carter de moteur avec une ouverture de réception (16), le moteur électrique (12) pénétrant au moins en partie dans le carter de réception, et comprenant des moyens (36, 42, 44, 46, 48) pour recevoir et/ou faire passer un élément de raccordement électrique (32) pour l'alimentation en puissance du moteur (12), **caractérisé en ce que**
- les moyens (36, 42, 44, 46, 48) pour recevoir et/ou faire passer un élément de raccordement électrique (32) comprennent au moins une lamelle élastique à ressort (42), qui est connectée au carter de réception (14),
- la lamelle élastique à ressort (42) présentant au moins une ouverture (44) pour recevoir et/ou faire passer l'élément de raccordement électrique (32) et
- l'élément de raccordement électrique (32) est fixé au moins à la lamelle élastique à ressort (42).

2. Dispositif selon la revendication 1, **caractérisé en ce que** la lamelle élastique à ressort (42) est connectée d'un côté au carter de réception (14).

3. Dispositif selon la revendication 1, **caractérisé en ce que** la lamelle élastique à ressort (42) est réalisée d'une seule pièce avec le carter de réception (14).

4. Dispositif selon la revendication 1, **caractérisé en ce que** l'élément de raccordement électrique (32) est encliqueté au moins avec la lamelle élastique à ressort (42).

5. Dispositif selon la revendication 4, **caractérisé en ce que** des moyens d'encliquetage (46) sont prévus sur la lamelle élastique à ressort (42).

6. Dispositif selon l'une quelconque des revendications précédentes, **caractérisé en ce que** l'élément de raccordement électrique (32) présente une fiche.

7. Dispositif selon l'une quelconque des revendications précédentes, **caractérisé en ce que** le carter de réception (14) présente une ouverture supplémentaire (36) pour recevoir et/ou faire passer l'élément de raccordement électrique (32).

8. Dispositif selon la revendication 7, **caractérisé en ce que** l'ouverture supplémentaire (36) du carter de réception présente des moyens d'étanchéité (48), en particulier des moyens d'étanchéité élastiques, qui viennent en appui entre l'élément de raccordement électrique (32) et au moins une paroi de carter du carter de réception (14).

9. Dispositif selon la revendication 8, **caractérisé en ce que** l'élément de raccordement électrique (32) présente des moyens d'étanchéité, en particulier des moyens d'étanchéité élastiques, qui viennent en appui entre l'élément de raccordement électrique (32) et au moins une paroi de carter du carter de réception (14).

10. Surcompresseur, présentant au moins une roue de compresseur, un moteur (12) entraînant la roue de compresseur ainsi qu'un dispositif selon l'une quelconque des revendications 1 à 9.
